# EUROPEAN PATENT APPLICATION

(11) **EP 4 390 513 A1**
(43) Date of publication of application: **26.06.2024**
(21) Application number: 22858345.6
(22) Date of filing: 05.08.2022
(51) Int. Cl.: G02B 30/56

(54) **AERIAL IMAGE DISPLAY APPARATUS**

(30) Priority: 20.08.2021 JP 2021135175
(71) Applicant: Kyocera Corporation, Kyoto-shi Kyoto 612-8501 (JP)
(72) Inventor: KAWANISHI, Hiroyoshi, Kyoto-shi, Kyoto 612-8501 (JP); SHIMOSE, Kazuki, Kyoto-shi, Kyoto 612-8501 (JP); KUSAFUKA, Kaoru, Kyoto-shi, Kyoto 612-8501 (JP)
(74) Representative: TBK
(86) International application number: PCT/JP2022/030111
(87) International publication number: WO 2023/022024

(57) **Abstract**

An aerial image display device includes a display, a first reflective element, and a controller. The display displays an image with traveling image light. The first reflective element reflects the traveling image light to form a real image in a field of view of a user. The controller changes luminance of the display based on a position of an eye of the user.

## Description

### TECHNICAL FIELD

The present disclosure relates to an aerial image display device.

### BACKGROUND OF INVENTION

A known technique is described in, for example, Patent Literature 1.

### PATENT LITERATURE

Patent Literature 1: Japanese Unexamined Patent Application Publication No. 2011-253128

### SUMMARY

In one embodiment of the present disclosure, an aerial image display device includes a display, a reflective optical element, and a controller. The display displays an image with traveling image light. The reflective optical element reflects the traveling image light to form a real image in a field of view of a user. The controller changes luminance of the display based on a position of an eye of the user.

### BRIEF DESCRIPTION OF THE DRAWINGS

The objects, features, and advantages of the present disclosure will become more apparent from the following detailed description and the drawings.
FIG. 1 is a schematic diagram of an aerial image display device according to an embodiment of the present disclosure.
FIG. 2 is a schematic diagram of a variation of the aerial image display device illustrated in FIG. 1.
FIG. 3 is a schematic diagram of a variation of the aerial image display device illustrated in FIG. 1.
FIG. 4 is a schematic diagram of a variation of the aerial image display device illustrated in FIG. 1.

### DESCRIPTION OF EMBODIMENTS

An aerial image display device with the structure that forms the basis of an aerial image display device according to one or more embodiments of the present disclosure will now be described.

A known display device described in Patent Literature 1 forms, for example, an aerial image from light emitted from a display using an optical element such as a retroreflector.

The aerial image viewed by a user is to have improved display quality.

One or more embodiments of the present disclosure will now be described with reference to the drawings. The drawings used herein are schematic and are not drawn to scale relative to the actual size of each component.

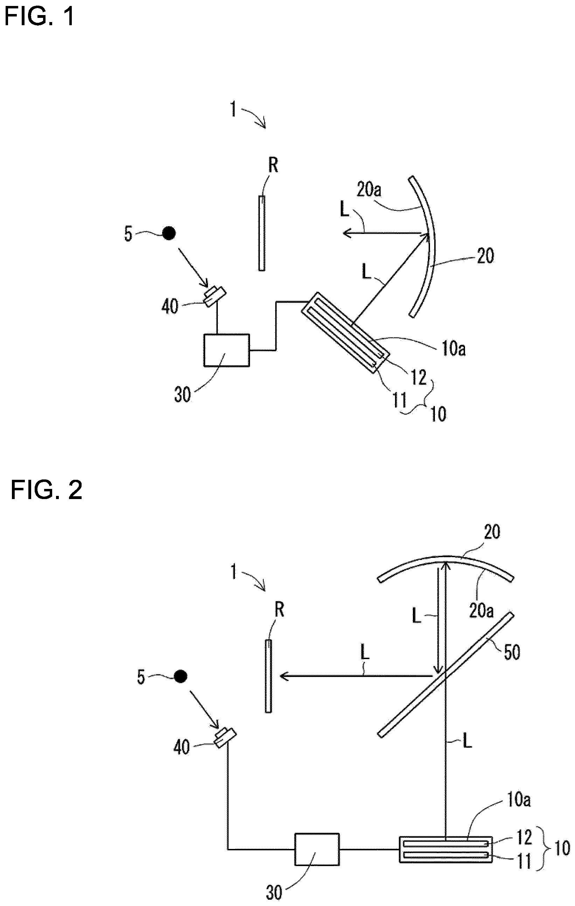

FIG. 1 is a schematic diagram of an aerial image display device according to an embodiment of the present disclosure. FIGs. 2 to 4 are each a schematic diagram of a variation of the aerial image display device illustrated in FIG. 1. In the present embodiment, an aerial image display device 1 includes a display 10, a first reflective element 20, and a controller 30 as illustrated in, for example, FIG. 1. The controller 30 controls the components of the aerial image display device 1.

The aerial image display device 1 may further include a camera 40 that can capture an image of a user. The camera 40 may capture an image of the face of the user and output the captured image to the controller 30. The camera 40 may output the captured image to the controller 30 through wired communication or wireless communication. The wired communication may include, for example, communication using a controller area network (CAN).

The controller 30 may detect the position of eyes 5 of the user based on the image output from the camera 40. The controller30 may detect the positions of the left and right eyes of the user as coordinates in a three-dimensional (3D) space. The controller 30 may use the position of the left eye or the position of the right eye as the position of the eyes 5 of the user, or the middle point of a line segment connecting the left eye position and the right eye position as the position of the eyes 5 of the user.

The camera 40 may be an infrared camera that receives infrared light and generates images. The camera 40 may function both as an infrared camera and a visible light camera. The camera 40 may include, for example, a charge-coupled device (CCD) image sensor or a complementary metal-oxide semiconductor (CMOS) image sensor.

The aerial image display device 1 may include no camera and may be connected to an external camera. The controller 30 may include an input terminal for receiving signals from the external camera. The external camera may be connected to the input terminal directly. The external camera may be connected to the input terminal indirectly through a shared network. The controller 30 may detect the position of the eyes 5 of the user based on an image signal received through the input terminal.

The controller 30 may not detect the position of the eyes 5 of the user. The aerial image display device 1 may include a detector to detect the position of the eyes 5 of the user. The detector may detect the position of the eyes 5 of the user based on an image output from the camera 40 and output the detected position of the eyes 5 to the controller 30.

The display 10 includes a display surface 10a and displays an image that travels as image light L on the display surface 10a. In other words, the display 10 emits the image light L through the display surface 10a.

The display 10 may be a transmissive display or a self-luminous display. For example, the transmissive display may be a liquid crystal display. For example, the self-luminous display may be a display including a self-luminous element such as a light-emitting diode (LED) element, an organic electroluminescent (OEL) element, an organic LED (OLED) element, or a semiconductor laser diode (LD) element.

The display 10 that is transmissive may be a liquid crystal display including a light source 11 and a display panel 12. The display surface 10a may be a surface of the display panel 12 through which light from the light source is emitted. The light source 11 is also referred to as a backlight. The display panel 12 is also referred to as a liquid crystal display panel.

The light source 11 may include multiple source elements that face the display surface 10a and are arranged two-dimensionally adjacent to the back surface opposite to the display surface 10a. Such a light source 11 may be referred to as a direct light source. The source elements may be, for example, LEDs, cold cathode fluorescent lamps, halogen lamps, or xenon lamps.

The light source 11 may include multiple source elements arranged on the outer periphery of the display panel 12. In the light source 11, light emitted from the source elements may be guided to the entire back surface opposite to the display surface 10a using a light guide plate. Such a light source 11 may be referred to as an edge light source. The edge light source 11 may include, for example, a lens array, a light guide plate, and a diffusion plate to apply light from the source elements uniformly onto the display surface 10a.

The display panel 12 may have the structure of a known liquid crystal display panel. The known liquid crystal display panel herein may be an in-plane switching (IPS) panel, a fringe field switching (FFS) panel, a vertical alignment (VA) panel, an electrically controlled birefringence (ECB) panel, or any of various other liquid crystal panels. The display panel 12 may include a first polarizing plate, a color filter substrate, a liquid crystal layer, an array substrate, and a second polarizing plate. The first polarizing plate may be located adjacent to the surface of the display panel 12 through which light from the light source is emitted.

The first reflective element 20 is located on the optical path of the image light L emitted from the display 10. The first reflective element 20 reflects the image light L emitted from the display 10 to form a real image R in the field of view of the user. A real image R is also referred to as an aerial image. The first reflective element 20 may be a concave mirror, or a combination of a lens and a plane mirror or a convex mirror. In the example described below, the first reflective element 20 is a concave mirror.

The first reflective element 20 may have a reflective surface 20a with a spherical shape, an aspherical shape, or a freeformed shape.

The first reflective element 20 has an object focal point being a focal point in an object space that includes the display 10, and an image focal point being a focal point in an image space opposite to the object space. In the aerial image display device 1, the display 10 is located farther from the first reflective element 20 than the object focal point of the first reflective element 20. Thus, an aerial image R corresponding to the image light L is formed in the image space.

The controller 30 may be, for example, a processor. The controller 30 may include one or more processors. The processors may include a general-purpose processor that reads a specific program to perform a specific function, and a processor dedicated to specific processing. The dedicated processor may include an application-specific integrated circuit (ASIC). The processors may include a programmable logic device (PLD). The PLD may include a field-programmable gate array (FPGA). The controller 30 may be either a system on a chip (SoC) or a system in a package (SiP) in which one or more processors cooperate with other components.

The inventors have noticed that in an aerial image display device including a reflective element to reflect image light, the luminance of a real image viewed by the user decreases in portions away from the center of the line of sight of the user, lowering the display quality of the real image viewed by the user. In the present embodiment, in the aerial image display device 1, the controller 30 changes the luminance of the display 10 based on the position of the eyes 5 of the user. This allows the aerial image R viewed by the user to have uniform luminance, thus improving the display quality of the aerial image R.

When, for example, the eyes 5 of the user move rightward to view a right portion of the aerial image R from the user, a left portion of the aerial image R appears to have lower luminance for the user. The controller 30 thus performs control to increase the luminance of the left portion of the aerial image R, or to decrease the luminance of the right portion of the aerial image R. In this case, when the eyes 5 of the user move rightward to view the right portion of the aerial image R from the user, the luminance in the left portion of the aerial image R is gradient downward as the distance from the user increases toward the left. The luminance of the left portion of the aerial image R may be gradually increased toward the left to correspond to the gradient of luminance. Similarly, the luminance of the right portion of the aerial image R may be gradually decreased toward the right.

When the eyes 5 of the user move leftward to view a left portion of the aerial image R from the user, a right portion of the aerial image R appears to have lower luminance for the user. The controller 30 thus performs control to increase the luminance of the right portion of the aerial image R, or to decrease the luminance of the left portion of the aerial image R. In this case, when the eyes 5 of the user move leftward to view the left portion of the aerial image R from the user, the luminance in the right portion of the aerial image R is gradient downward as the distance from the user increases toward the right. The luminance of the right portion of the aerial image R may be gradually increased toward the right to correspond to the gradient of luminance. Similarly, the luminance of the left portion of the aerial image R may be gradually decreased toward the left.

When the eyes 5 of the user move upward to view an upper portion of the aerial image R from the user, a lower portion of the aerial image R appears to have lower luminance for the user. The controller 30 thus performs control to increase the luminance of the lower portion of the aerial image R, or to decrease the luminance of the upper portion of the aerial image R. In this case, when the eyes 5 of the user move upward to view the upper portion of the aerial image R from the user, the luminance in the lower portion of the aerial image R is gradient downward as the distance from the user increases toward the bottom. The luminance of the lower portion of the aerial image R may be gradually increased toward the bottom to correspond to the gradient of luminance. Similarly, the luminance of the upper portion of the aerial image R may be gradually decreased toward the top.

When the eyes 5 of the user move downward to view a lower portion of the aerial image R from the user, an upper portion of the aerial image R appears to have lower luminance for the user. The controller 30 thus performs control to increase the luminance of the upper portion of the aerial image R, or to decrease the luminance of the lower portion of the aerial image R. In this case, when the eyes 5 of the user move downward to view the lower portion of the aerial image R from the user, the luminance in the upper portion of the aerial image R is gradient downward as the distance from the user increases toward the top. The luminance of the upper portion of the aerial image R may be gradually increased toward the top to correspond to the gradient of luminance. Similarly, the luminance of the lower portion of the aerial image R may be gradually decreased toward the bottom.

The controller 30 may change the luminance of the display 10 to increase the luminance of a portion of the aerial image R with lower luminance. This allows the aerial image R viewed by the user to have uniform luminance without causing a decrease in luminance of the aerial image R as viewed by the user, thus improving the display quality of the aerial image R. The portion with lower luminance may be a portion estimated to have lower luminance that may be determined based on the position of the eyes 5 of the user. The portion with lower luminance may also be a portion with lower luminance that may be determined based on an image captured with a camera located near the head of the user.

The controller 30 may change the luminance of multiple pixels in the display 10 individually based on the position of the eyes 5 of the user. This allows the aerial image R viewed by the user to have uniform luminance with high precision. The resultant aerial image R can have improved display quality.

The controller 30 may divide the multiple pixels in the display 10 into multiple pixel groups. The multiple pixel groups may each include multiple pixels. The controller 30 may change the luminance of the multiple pixel groups individually based on the position of the eyes 5 of the user. When changing the luminance of the multiple pixel groups individually, the controller 30 may change the luminance of the multiple pixels in each pixel group uniformly. This reduces the processing load on the controller 30 and allows the aerial image R to have uniform luminance rapidly based on the position of the eyes 5, following changes in the position of the eyes 5 of the user. The resultant aerial image R can have improved display quality.

When the display 10 is a liquid crystal display including the light source 11 and the display panel 12, the controller 30 may control the light source 11 based on the position of the eyes 5 of the user to change the luminance of the display 10. When the display 10 is a self-luminous display, the controller 30 may control at least one light emitter included in each pixel in the display 10 to change the luminance of the display 10.

When the display 10 is a liquid crystal display including the light source 11 and the display panel 12, the controller 30 may control the light intensity of the light source 11 to change the luminance of the display 10.

When the light source 11 is a direct light source with multiple source elements that each are assigned to a corresponding one of multiple pixels, the controller 30 may control the light intensity of the source elements individually to change the luminance of each pixel in the display 10. When the light source 11 is a direct light source and the controller 30 divides the multiple pixels in the display 10 into multiple pixel groups, the controller 30 may control the luminance of the pixel groups individually to change the luminance of each pixel in the display 10.

When the light source 11 is an edge light source, the display 10 may further include a light shielding panel. The light shielding panel may be located between the light source 11 and the display panel 12, or in front of the display surface 10a. The light shielding panel may be a liquid crystal shutter. The liquid crystal shutter can control the light transmittance based on a voltage applied. The liquid crystal shutter may include multiple pixels and control the light transmittance for each pixel. The multiple pixels in the liquid crystal shutter may correspond one-to-one to the multiple pixels in the display panel 10. The liquid crystal shutter may change the transmittance of light in a range between a first predetermined value and a second predetermined value. The first predetermined value may be, for example, 100% or a value close to 100%. The second predetermined value may be, for example, 0% or a value close to 0%. The second predetermined value may be defined as a ratio relative to the first predetermined value. The ratio of the second predetermined value to the first predetermined value may be 1/100 or 1/1000.

The controller 30 may set the light transmittance for pixels in the light shielding panel corresponding to a portion of the aerial image R with lower luminance to the first predetermined value. The controller 30 may set the light transmittance for pixels in the light shielding panel corresponding to a portion of the aerial image R with no luminance decrease to a value greater than the first predetermined value and less than or equal to the second predetermined value. This allows the portion with no luminance decrease to have luminance closer to the luminance of the portion with lower luminance, thus allowing the luminance of the aerial image R to be uniform. The resultant aerial image R can have improved display quality.

The controller 30 may increase the light intensity of the light source 11 when controlling the luminance to be uniform using the light shielding panel. This allows the aerial image R viewed by the user to have uniform luminance without causing a decrease in luminance of the aerial image R as viewed by the user, thus improving the display quality of the aerial image R.

The controller 30 may change the luminance of the display 10 based on a predicted position of the eyes 5 of the user. This allows the aerial image R to have uniform luminance reflecting small changes in the position of the eyes 5 of the user, thus improving the display quality of the aerial image R. The predicted position of the eyes 5 of the user may be the position of the eyes 5 at the current time predicted based on the position of the eyes 5 at a time before the current time. The time before the current time may be multiple points of time before the current time. The position of the eyes 5 at a time before the current time may be the position of the eyes 5 detected from the image output from the camera 40, or a predicted position of the eyes 5 at a time before the current time.

The controller 30 may generate a prediction function based on the position of the eyes 5 at a time before the current time. The controller 30 may use the generated prediction function to calculate the predicted position of the eyes 5 at the current time.

The controller 30 may control the image to be displayed on the display 10 based on the position of the eyes 5 of the user. When the aerial image display device 1 includes a reflective element that reflects image light, the aerial image R viewed by the user is likely to be distorted. The controller 30 may control the image to be displayed on the display 10 to reduce distortion caused by the first reflective element 20. The shape of the reflecting surface 20a of the first reflective element 20 can be measured in advance. Thus, the distortion may be corrected using, for example, a distortion correction table predefined as appropriate for the shape of the reflecting surface 20a. The distortion correction table may be a look-up table that associates the position of each pixel in the image before correction with the position of the corresponding pixel in the image after correction. The image before correction is also referred to as a pre-image. The image after correction is also referred to as a post-image.

The controller 30 may control the image to be displayed on the display 10 based on the position of the eyes 5 of the user and the distortion correction table. Thus, the distortion of the aerial image R viewed by the user can be corrected, improving the display quality of the aerial image R.

The inventors have noticed that an aerial image display device including a reflective element that reflects image light for the user to view a real image can have the luminance of the real image decreasing in its distorted portions more noticeably as the distortion is greater. The controller 30 may change the luminance of pixels in the display 10 based on the distortion correction table. The controller 30 may change the luminance of each pixel in the display 10 based on the distance (hereinafter also referred to as a distortion distance) between the position of each pixel in the pre-image and the position of the corresponding pixel in the post-image associated with each other in the distortion correction table. When, for example, the pixel at coordinates (5, 0) in the post-image is associated, in the distortion correction table, with the pixel at coordinates (7, 2) in the pre-image, a distortion distance d may be, for example, a Euclidean distance given by d = [(5 - 7)² + (0 - 2)²]^{1/2}.

The controller 30 may change the luminance of the display 10 to increase the luminance of pixels at a distortion distance d greater than 0 in the post-image without changing the luminance of pixels at a distortion distance d of 0 in the post-image. This corrects the distortion of the aerial image R and allows the aerial image R to have uniform luminance, thus improving the display quality of the aerial image R. The controller 30 may increase the luminance as the distortion distance d increases.

The distortion correction table may or may not store the distortion distance d. When the distortion distance d is not stored in the distortion correction table, the controller 30 may calculate the distortion distance d based on the position of each pixel in the pre-image and the position of the corresponding pixel in the post-image associated with each other in the distortion correction table. The distortion distance d calculated by the controller 30 may be, for example, a Euclidean distance or a Manhattan distance between the coordinates of each pixel in the pre-image and the coordinates of the corresponding pixel in the post-image. Calculating the distortion distance d as a Manhattan distance between the coordinates of each pixel in the pre-image and the coordinates of the corresponding pixel in the post-image reduces the processing loads on the controller 30, allowing the luminance of the aerial image R to be uniform rapidly based on the position of the eyes 5, following changes in the position of the eyes 5 of the user. The resultant aerial image R can have improved display quality.

The aerial image display device 1 may be in other embodiments described below. The camera 40 may capture an image of the user to obtain an image of the pupils of the eyes 5 of the user. The controller 30 may perform control to increase the luminance of the image to be displayed on the display 10 when the pupils enlarge. When the pupils of the user enlarge, the user gazes at the image or a part of the image. Increasing the luminance of the image to be displayed on the display 10 allows the user to view the image or a part of the image more easily. This allows the user aboard a transport vehicle to avoid unsafe situations more easily. The luminance of the image may be increased by a factor of, but not limited to, more than one and about ten or less. A part of the image being gazed at by the user may be detected, and the luminance may be increased in the part of the image being gazed at by the user.

The camera 40 may capture an image of the user to obtain an image of the pupils of the eyes 5 of the user, and the controller 30 may perform control to enlarge the image to be displayed on the display 10 when the pupils enlarge. This produces the same or similar advantageous effects as described above, allowing the user aboard a transport vehicle to avoid unsafe situations more easily. The ratio of enlargement of the image may be, but not limited to, more than one time and about three times or less. A part of the image being gazed at by the user may be detected, and the part of the image being gazed at by the user may be enlarged.

The camera 40 may capture an image of the user to obtain an image of the pupils of the eyes 5 of the user. The controller 30 may perform control to increase the contrast of the image to be displayed on the display 10 when the pupils enlarge. This produces the same or similar advantageous effects as described above, allowing the user aboard a transport vehicle to avoid unsafe situations more easily. The contrast of the image may be increased by a factor of, but not limited to, more than one and about two or less. A part of the image being gazed at by the user may be detected and the contrast may be increased in the part of the image being gazed at by the user.

The camera 40 may capture an image of the user to obtain an image of the pupils of the eyes of the user. The controller 30 may perform control to increase the frame frequency of the image to be displayed on the display 10 when the pupils enlarge. This produces the same or similar advantageous effects as described above, allowing the user aboard a transport vehicle to avoid unsafe situations more easily. The frame frequency of the image may be increased by a factor of, but not limited to, more than one and about eight or less. When, for example, the frame frequency of an original image is 30 Hz, the frame frequency of the image to be displayed on the display 10 may be higher than 30 Hz and about 240 Hz or lower.

The aerial image display device 1 may further include a second reflective element 50 as illustrated in, for example, FIG. 2. The second reflective element 50 may be located on the optical path of the image light L between the display 10 and the first reflective element 20. The second reflective element 50 may transmit a portion of the image light L emitted from the display 10 to the first reflective element 20 and reflect a portion of the image light L reflected from the first reflective element 20. The second reflective element 50 may be, for example, a semitransparent mirror, a wire-grid polarizer, a reflective polarizing plate, or a beam splitter.

The second reflective element 50 increases the flexibility in positioning the display 10 and the first reflective element 20, allowing, for example, positioning of the first reflective element 20 not to obstruct the frontward view of the user. Thus, the aerial image display device 1 can be mounted on a movable body, such as a vehicle, a vessel, or an aircraft.

In the aerial image display device 1 with the display 10 being a liquid crystal display and the second reflective element 50 being a polarizer or a polarizing plate, the polarization direction of the first polarizing plate in the liquid crystal display and the polarization direction of the second reflective element 50 may be substantially parallel to each other. This structure can increase the transmittance of the image light L through the second reflective element 50, thus increasing the light use ratio of the aerial image display device 1. This increases the luminance of the aerial image R, thus improving the display quality of the aerial image R. The structure may also reduce the light intensity of the light source 11, thus reducing the power consumption of the aerial image display device 1.

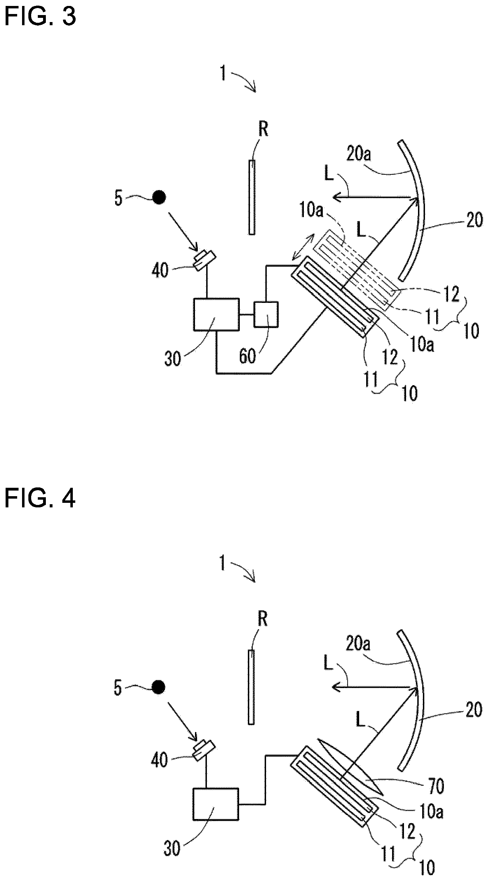

The aerial image display device 1 may further include a drive 60 to move the display 10 as illustrated in, for example, FIG. 3. The drive 60 may move the display 10 parallel to a direction orthogonal to the display surface 10a. The drive 60 may move the display 10 with, for example, a motor or a piezoelectric element. The controller 30 may control the drive 60.

The aerial image display device 1 including the drive 60 can change the distance between the display 10 and the first reflective element 20. Thus, the position at which the aerial image R is formed (also referred to as a pop-out distance) and the size of the aerial image R as viewed by the user can be changed. In the aerial image display device 1, changing the pop-out distance of the aerial image R changes the size of the aerial image R accordingly. Reducing (the size of) the image to be displayed on the display surface 10a of the display 10 can change the pop-out distance of the aerial image R alone.

The aerial image display device 1 may include a lens 70 in place of the drive 60 as illustrated in, for example, FIG. 4. The lens 70 may be located on the optical path of the image light L between the display 10 and the first reflective element 20. When the aerial image display device 1 includes the second reflective element 50, the lens 70 may be located on the optical path of the image light L between the display 10 and the second reflective element 50. Thus, the pop-out distance of the aerial image R and the size of the aerial image R can be changed.

The aerial image display device 1 may include a lens drive (not illustrated) to translate or rotate the lens 70. The lens drive may place and remove the lens 70 into and out of the optical path of the image light L. The controller 30 may control the lens drive.

The lens 70 may be, for example, a biconvex lens, a plano-convex lens, a biconcave lens, or a plano-concave lens. The lens 70 may have a lens surface with a spherical shape, an aspherical shape, or a freeformed shape. The lens 70 may include an anti-reflection film on a part of or a full portion of the lens surface to reduce reflection of light from the lens surface. Thus, the aerial image display device 1 may have a higher light use ratio. This increases the luminance of the aerial image R, thus improving the display quality of the aerial image R.

The aerial image display device 1 may be mounted on a movable body. The aerial image display device 1 may be at any position inside or outside the movable body. The aerial image display device 1 may be installed, for example, inside a dashboard in the movable body.

In one or more embodiments of the present disclosure, examples of the movable body include a vehicle, a vessel, and an aircraft. Examples of the vehicle include an automobile, an industrial vehicle, a railroad vehicle, a community vehicle, and a fixed-wing aircraft traveling on a runway. Examples of the automobile include a passenger vehicle, a truck, a bus, a motorcycle, and a trolley bus. Examples of the industrial vehicle include an industrial vehicle for agriculture and an industrial vehicle for construction. Examples of the industrial vehicle include a forklift and a golf cart. Examples of the industrial vehicle for agriculture include a tractor, a cultivator, a transplanter, a binder, a combine, and a lawn mower. Examples of the industrial vehicle for construction include a bulldozer, a scraper, a power shovel, a crane vehicle, a dump truck, and a road roller. Examples of the vehicle include a human-powered vehicle. The classification of the vehicle is not limited to the above examples. Examples of the automobile include an industrial vehicle travelling on a road. One type of vehicle may fall within multiple classes. Examples of the vessel include a jet ski, a boat, and a tanker. Examples of the aircraft include a fixed-wing aircraft and a rotary-wing aircraft.

The aerial image display device 1 including the camera 40 may be attached to a movable body. The camera 40 captures an image of a space expected to include, for example, the face, or the upper body of the user (driver) of the movable body. The camera 40 may be installed at any position inside or outside the movable body. The camera 40 may be installed, for example, inside or on a dashboard in the movable body. The camera 40 may be installed, for example, inside another device such as an air duct.

The movable body incorporating the aerial image display device 1 allows the user to view an aerial image R with high display quality. The aerial image R may include information about the speed or the orientation of the movable body and the state of its prime mover, such as an engine or motor.

In one or more embodiments of the present disclosure, first, second, or others are identifiers for distinguishing the components. The identifiers of the components distinguished with first, second, and others in the present disclosure are interchangeable. For example, the first reflective element is interchangeable with the second reflective element. The identifiers are to be interchanged together. The components for which the identifiers are interchanged are also to be distinguished from one another. The identifiers may be eliminated. The components without such identifiers can be distinguished with reference numerals. The identifiers such as first and second in the present disclosure alone should not be used to determine the order of components or to suggest the existence of smaller number identifiers.

The aerial image display device according to one or more embodiments of the present disclosure may be implemented in forms 1 to 14 described below.
(1) An aerial image display device, comprising:
   a display configured to display an image with traveling image light;
   a first reflective element configured to reflect the traveling image light to form a real image in a field of view of a user; and
   a controller configured to change luminance of the display based on a position of an eye of the user.
(2) The aerial image display device according to (1), wherein
   the display includes a display panel and a light source.
(3) The aerial image display device according to (2), wherein
   the controller controls the light source based on the position of the eye of the user to change the luminance of the display.
(4) The aerial image display device according to any one of (1) to (3), wherein
   the controller controls an image to be displayed on the display based on the position of the eye of the user.
(5) The aerial image display device according to (4), wherein
   the controller includes a distortion correction table for an image to be displayed on the display and changes the luminance of the display based on the distortion correction table corresponding to the position of the eye of the user.
(6) The aerial image display device according to any one of (1) to (5), further comprising:
   a camera configured to capture an image of the user.
(7) The aerial image display device according to (6), wherein
   the controller calculates a predicted position of the eye of the user based on the image of the user captured by the camera and changes the luminance of the display based on the calculated predicted position of the eye.
(8) The aerial image display device according to (6), wherein
   the camera captures the image of the user to obtain an image of a pupil of the eye of the user, and
   the controller increases the luminance of an image to be displayed on the display when the pupil enlarges.
(9) The aerial image display device according to (6), wherein
   the camera captures the image of the user to obtain an image of a pupil of the eye of the user, and
   the controller enlarges an image to be displayed on the display when the pupil enlarges.
(10) The aerial image display device according to (6), wherein
   the camera captures the image of the user to obtain an image of a pupil of the eye of the user, and
   the controller increases a contrast of an image to be displayed on the display when the pupil enlarges.
(11) The aerial image display device according to (6), wherein
   the camera captures the image of the user to obtain an image of a pupil of the eye of the user, and
   the controller increases a frame frequency of an image to be displayed on the display when the pupil enlarges.
(12) The aerial image display device according to any one of (1) to (11), further comprising:
   a second reflective element on an optical path of the traveling image light between the display and the first reflective element.
(13) The aerial image display device according to (12), wherein
   the second reflective element transmits a portion of the traveling image light emitted from the display to the first reflective element and reflects a portion of the traveling image light reflected from the first reflective element.
(14) The aerial image display device according to any one of (1) to (13), further comprising:
   a drive configured to move the display.

In one embodiment of the present disclosure, the aerial image display device improves the display quality of the aerial image viewed by the user.

The present disclosure may be embodied in various forms without departing from the spirit or the main features of the present disclosure. The embodiments described above are thus merely illustrative in all respects. The scope of the present disclosure is defined not by the description given above but by the claims. Any variations and alterations contained in the claims fall within the scope of the present disclosure.

### REFERENCE SIGNS

- 1: aerial image display device
- 5: eye
- 10: display
- 10a: display surface
- 11: light source
- 12: display panel
- 20: first reflective element (concave mirror)
- 20a: reflective surface
- 30: controller
- 40: camera
- 50: second reflective element
- 60: drive
- 70: lens

## Claims

1. An aerial image display device, comprising:
a display configured to display an image with traveling image light;
a first reflective element configured to reflect the traveling image light to form a real image in a field of view of a user; and
a controller configured to change luminance of the display based on a position of an eye of the user.

2. The aerial image display device according to claim 1, wherein
the display includes a display panel and a light source.

3. The aerial image display device according to claim 2, wherein
the controller controls the light source based on the position of the eye of the user to change the luminance of the display.

4. The aerial image display device according to any one of claims 1 to 3, wherein
the controller controls an image to be displayed on the display based on the position of the eye of the user.

5. The aerial image display device according to claim 4, wherein
the controller includes a distortion correction table for an image to be displayed on the display and changes the luminance of the display based on the distortion correction table corresponding to the position of the eye of the user.

6. The aerial image display device according to any one of claims 1 to 5, further comprising:
a camera configured to capture an image of the user.

7. The aerial image display device according to claim 6, wherein
the controller calculates a predicted position of the eye of the user based on the image of the user captured by the camera and changes the luminance of the display based on the calculated predicted position of the eye.

8. The aerial image display device according to claim 6, wherein
the camera captures the image of the user to obtain an image of a pupil of the eye of the user, and
the controller increases the luminance of an image to be displayed on the display when the pupil enlarges.

9. The aerial image display device according to claim 6, wherein
the camera captures the image of the user to obtain an image of a pupil of the eye of the user, and
the controller enlarges an image to be displayed on the display when the pupil enlarges.

10. The aerial image display device according to claim 6, wherein
the camera captures the image of the user to obtain an image of a pupil of the eye of the user, and
the controller increases a contrast of an image to be displayed on the display when the pupil enlarges.

11. The aerial image display device according to claim 6, wherein
the camera captures the image of the user to obtain an image of a pupil of the eye of the user, and
the controller increases a frame frequency of an image to be displayed on the display when the pupil enlarges.

12. The aerial image display device according to any one of claims 1 to 11, further comprising:
a second reflective element on an optical path of the traveling image light between the display and the first reflective element.

13. The aerial image display device according to claim 12, wherein
the second reflective element transmits a portion of the traveling image light emitted from the display to the first reflective element and reflects a portion of the traveling image light reflected from the first reflective element.

14. The aerial image display device according to any one of claims 1 to 13, further comprising:
a drive configured to move the display.
